# FASCICULE DE BREVET EUROPEEN

(11) **EP 3 329 108 B1**
(45) Date de publication et mention de la délivrance du brevet: **03.11.2021**
(21) Numéro de dépôt: 16760123.6
(22) Date de dépôt: 26.07.2016
(51) Int. Cl.: F02C 7/06, F02C 7/25

(54) **ISOLATION D'UN RESERVOIR DE TURBOMACHINE D'AERONEF EN CAS D'INCENDIE PAR FERMETURE D'UNE VANNE SENSIBLE A LA LIBERATION D'UN AGENT EXTINCTEUR**
ISOLATION EINES FLUGZEUGTRIEBWERKTANKS IM BRANDFALL DURCH SCHLIESSEN EINES FÜR DIE FREISETZUNG EINES LÖSCHMITTELS SENSITIVEN VENTILS
ISOLATION OF AN AIRCRAFT TURBINE ENGINE TANK IN CASE OF A FIRE BY CLOSING A VALVE SENSITIVE TO THE RELEASE OF AN EXTINGUISHANT

(30) Priorité: 31.07.2015 FR 1557425
(43) Date de publication de la demande: 06.06.2018
(73) Titulaire: Safran Aircraft Engines, 75015 Paris (FR)
(72) Inventeur: MULLER, Jean-Louis, 77550 Moissy-Cramayel (FR)
(74) Mandataire: Brevalex
(86) Numéro de dépôt international: PCT/FR2016/051939
(87) Numéro de publication internationale: WO 2017/021621

(56) Documents cités:
- GB-A- 870 705
- US-A- 4 304 093

## Description

### DOMAINE TECHNIQUE

L'invention se rapporte à l'isolation au feu d'un réservoir pour système d'alimentation en fluide combustible de turbomachine d'aéronef.

### ÉTAT DE LA TECHNIQUE ANTÉRIEURE

Certaines réglementations obligent une turbomachine d'aéronef à résister à un incendie pendant une durée minimale, tout en évitant que l'incendie ne soit alimenté en fluide combustible, typiquement du lubrifiant, pendant ce temps.

Divers équipements de turbomachine sont alimentés en lubrifiant par un système de lubrification qui laisse généralement circuler un débit de lubrifiant suffisant pour refroidir la turbomachine en cas d'incendie.

Cependant, lorsque le débit de lubrifiant s'avère trop faible lors d'un incendie, il est nécessaire de limiter le débit d'huile en direction de ces équipements et/ou de prévoir une protection anti-feu spécifique pour ces équipements. Ces protections spécifiques anti-feu présentent l'inconvénient d'être préjudiciable en termes de masse et d'encombrement.

Afin de limiter le débit de lubrifiant circulant en cas d'incendie, il est en outre connu d'isoler le réservoir de lubrifiant par une vanne de coupure contrôlée par un système de régulation, au moins tant que le feu n'est pas définitivement éteint.

Néanmoins, le système de régulation de certaines turbomachines ou de certains avions risque de ne pas être disponible pendant l'incendie pour commander la fermeture de cette vanne de coupure, comme l'atteste par exemple la demande EP 1 936 122, ce qui peut engendrer des coupures intempestives même en dehors de cas d'incendies.

Il existe donc un besoin d'isoler un réservoir de fluide combustible de turbomachine en cas d'incendie seulement, tout en limitant à la fois les exigences de disponibilité d'un système de régulation, la masse et l'encombrement de la turbomachine.

### EXPOSÉ DE L'INVENTION

L'invention vise à résoudre au moins partiellement les problèmes rencontrés dans les solutions de l'art antérieur.

A cet égard, l'invention a pour objet un ensemble pour turbomachine comprenant un système d'extinction d'incendie et un système d'alimentation en fluide combustible. Le système d'extinction d'incendie est configuré pour libérer un agent extincteur dans la turbomachine. Le système d'alimentation en fluide comprend un réservoir, une partie aval située en aval du réservoir, et une vanne de coupure située entre le réservoir et la partie aval. La vanne de coupure est configurée pour limiter/interdire un débit de fluide en direction de la partie aval en cas d'incendie.

Selon l'invention, l'ensemble comprend des moyens de communication fluidique reliant fluidiquement le système d'extinction d'incendie à la vanne de coupure, la vanne de coupure étant configurée pour se fermer en réponse à une augmentation de pression d'agent extincteur dans les moyens de communication fluidique.

Le système d'alimentation est alors moins lourd et moins encombrant que s'il était équipé de protections spécifiques contre les incendies.

De plus, le système de régulation de la turbomachine et/ou de l'aéronef n'est pas sollicité pour fermer la vanne de coupure en cas d'incendie puisque celle-ci se ferme automatiquement sous l'effet d'une augmentation de pression d'agent extincteur dans les moyens de communication fluidique, lors d'une libération d'agent extincteur dans le système d'extinction d'incendie.

Le fluide combustible est de préférence du lubrifiant. En variante, il s'agit de carburant.

L'invention peut comporter de manière facultative une ou plusieurs des caractéristiques suivantes combinées entre elles ou non.

Avantageusement, le système d'extinction d'incendie comprend au moins une canalisation pour amener de l'agent extincteur sous pression dans la turbomachine, et les moyens de communication fluidique comprennent un conduit situé entre la canalisation et la vanne de coupure. La vanne de coupure est alors configurée pour se fermer en réponse à une augmentation de pression d'agent extincteur dans le conduit.

Selon une particularité de réalisation, le système d'extinction d'incendie comprend au moins une réserve d'agent extincteur. L'agent extincteur est de préférence entreposé sous pression dans la réserve.

Selon une forme de réalisation avantageuse, la vanne de coupure comprend une entrée pour le fluide et une sortie pour le fluide. La vanne de coupure comprend en outre un orifice d'arrivé d'agent extincteur relié fluidiquement au système d'extinction d'incendie. La vanne de coupure est configurée pour limiter/empêcher la circulation de fluide entre l'entrée et la sortie, en réponse à une augmentation de pression d'agent extincteur dans l'orifice d'arrivée d'agent extincteur.

De préférence, la vanne de coupure comprend un déclencheur de fermeture et un dispositif à ressort. La vanne est configurée pour qu'une force de pression d'agent extincteur exercée sur le déclencheur soit démultipliée par le dispositif à ressort pour fermer la vanne de coupure.

Selon une autre forme de réalisation avantageuse, la vanne de coupure est configurée pour être réarmée manuellement, l'obturateur de la vanne de coupure se déplaçant depuis sa position extrême de fermeture jusqu'à sa position extrême d'ouverture.

L'invention porte également sur un procédé d'isolation d'un réservoir de fluide combustible relativement à une partie aval de système d'alimentation en fluide pour turbomachine, le système d'alimentation comprenant le réservoir et une vanne de coupure située entre le réservoir et la partie aval, la vanne de coupure étant configurée pour limiter/interdire un débit de fluide en direction de la partie aval, la vanne de coupure étant reliée fluidiquement à un système d'extinction d'incendie par des moyens de communication fluidique, le système d'extinction d'incendie étant configuré pour libérer un agent extincteur dans la turbomachine. Selon l'invention, le procédé comprend une étape de fermeture de la vanne de coupure en réponse à une augmentation de pression d'agent extincteur dans les moyens de communication fluidique.

De préférence, la vanne de coupure comprend un obturateur qui est mobile entre une position extrême d'ouverture et une position extrême de fermeture. La vanne de coupure laisse circuler du fluide en direction de la partie aval lorsque l'obturateur est en position extrême d'ouverture. La vanne de coupure interdit l'alimentation en fluide de la partie aval lorsque l'obturateur est en position extrême de fermeture. L'obturateur est destiné à être en position extrême d'ouverture tant que de l'agent extincteur n'a été pas été libéré dans les moyens de communication fluidique.

Selon une autre particularité de réalisation, le procédé d'isolation du réservoir comprend une étape d'interdiction d'un régime de décollage de la turbomachine tant que la vanne de coupure est au moins partiellement fermée.

Selon une autre particularité de réalisation, le procédé d'isolation comprend une étape de l'imitation/d'interdiction d'ouverture ultérieure de la vanne jusqu'à la fin du vol de la turbomachine, une fois que la vanne de coupure s'est fermée suite à une augmentation de pression d'agent extincteur dans les moyens de communication fluidique. Ceci limite le risque d'alimenter un incendie en fluide combustible jusqu'à la fin du vol.

Un exemple non revendiqué se rapporte aussi à un procédé d'extinction d'incendie dans une turbomachine comprenant :
une étape de libération d'agent extincteur dans la turbomachine, suite à une détection d'incendie dans la turbomachine, pour éteindre l'incendie, et
la mise en œuvre du procédé d'isolation telle que défini ci-dessus, en réponse à une augmentation de pression d'agent extincteur dans les moyens de communication fluidique.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une vue schématique partielle en coupe longitudinale d'une turbomachine d'aéronef;
- la figure 2 représente de manière fonctionnelle un système d'alimentation en lubrifiant et un système d'extinction d'incendie, selon un premier mode de réalisation de l'invention ;
- la figure 3 illustre la mise en œuvre d'un procédé d'isolation du réservoir du système d'alimentation selon le premier mode de réalisation ;
- la figure 4 illustre la mise en œuvre d'un procédé de vérification de fermeture de la vanne avant le décollage de la turbomachine.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

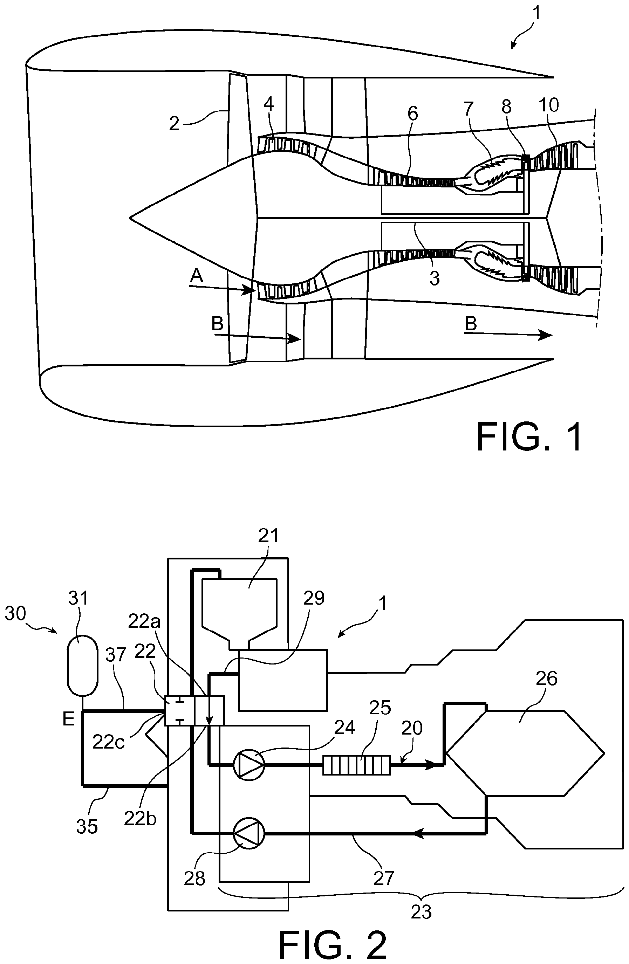

La figure 1 représente une turbomachine 1 à double flux et à double corps annulaires autour d'un axe longitudinal 3 de la turbomachine. La turbomachine 1 comprend dans cet ordre sur le chemin d'écoulement d'un flux primaire A une soufflante 2, un compresseur basse pression 4, un compresseur haute pression 6, une chambre de combustion 7, une turbine haute pression 8 et une turbine basse pression 10.

Le compresseur basse pression 4, le compresseur haute pression 6, la turbine haute pression 8 et la turbine basse pression 10 délimitent une veine secondaire d'écoulement d'un flux secondaire B qui les contourne.

Le compresseur haute pression 6 et la turbine haute pression 8 sont reliées mécaniquement par un arbre d'entraînement du compresseur haute pression 6, pour former un corps haute pression de la turbomachine 1. De manière similaire, le compresseur basse pression 4 et la turbine basse pression 10 sont reliées mécaniquement par un arbre de turbomachine 1, de façon à former un corps basse pression.

En référence à la figure 2, la turbomachine comporte un système d'alimentation en lubrifiant qui comporte un système d'alimentation en lubrifiant 20 et une ligne de retour de lubrifiant 27. Ce lubrifiant est typiquement de l'huile.

Le système d'alimentation en lubrifiant 20 est conçu pour alimenter en lubrifiant divers équipements de la turbomachine situés à l'intérieur d'enceintes de lubrification 26. Le système d'alimentation 20 comprend un réservoir 21 de lubrifiant, une partie aval 23 qui est située en aval du réservoir 21, ainsi qu'une vanne de coupure 22 située entre le réservoir 21 et la partie aval 23.

Les directions « amont » et « aval » sont définies par rapport à la direction générale d'écoulement du lubrifiant depuis le réservoir 21 vers les enceintes de lubrification 26.

La partie aval 23 comporte une pompe d'alimentation en lubrifiant 24 et un échangeur de chaleur 25. L'échangeur 25 est ici situé entre la pompe d'alimentation 24 et les enceintes de lubrification 26. Il sera compris que l'échangeur 25 peut être situé à une autre position dans la partie aval 23.

Le lubrifiant se refroidit dans l'échangeur 25 avant de retourner dans le réservoir 21, ce qui limite les risques de dégradations prématurées du lubrifiant.

La vanne de coupure 22 comprend une seule entrée 22a de lubrifiant et une seule sortie 22b de lubrifiant. L'entrée 22a est reliée fluidiquement au réservoir 21 et la sortie 22b est reliée fluidiquement à la partie aval 23.

La vanne de coupure 22 comprend un obturateur bistable qui est mobile entre une position extrême d'ouverture stable et une position extrême de fermeture stable. La vanne de coupure est destinée à être réarmée à la main pour que l'obturateur se déplace de sa position extrême de fermeture à sa position extrême d'ouverture.

Selon une variante de réalisation, l'obturateur de la vanne de coupure 22 est réalisé de manière qu'il obture progressivement l'écoulement de lubrifiant, de manière que la vanne de coupure 22 limite le débit de lubrifiant en direction de la partie aval 23.

En position extrême d'ouverture, la vanne de coupure 22 laisse circuler du lubrifiant entre son entrée 22a et sa sortie 22b. Le lubrifiant s'écoule alors librement dans une canalisation 29 qui relie le réservoir 21 à la pompe d'alimentation 24. Cette canalisation 29 est de grand diamètre, typiquement entre 0.75 et 2 pouces (entre 19.05 et 50.80 millimètres) et elle est facilement accessible, de même que la vanne de coupure 22, ce qui permet de réarmer la vanne de coupure 22 à la main.

En position extrême de fermeture, la vanne de coupure 22 interdit au lubrifiant de s'écouler depuis son entrée 22a jusqu'à sa sortie 22b, pour éviter la circulation de lubrifiant dans la canalisation 29 en direction de la partie aval 23.

L'obturateur est en position extrême de fermeture en cas d'incendie détecté dans la turbomachine. Il est particulièrement intéressant que la vanne de coupure 22 soit fermée en cas de feu dans la turbomachine 1 lorsque le débit de lubrifiant dans le système d'alimentation 20 serait insuffisant pour refroidir suffisamment le système d'alimentation 20. La position extrême de fermeture de l'obturateur est donc sa position de sécurité vers laquelle il tend naturellement lorsqu'il n'est pas en position extrême d'ouverture.

En fonctionnement normal de la turbomachine, l'obturateur est en position extrême d'ouverture pour lubrifier correctement les équipements situés dans les enceintes de lubrification 26.

Après avoir alimenté les divers équipements des enceintes de lubrification 26, le lubrifiant retourne au réservoir 21 à travers la ligne de retour de lubrifiant 27. La ligne de retour 27 comprend une pompe de retour en lubrifiant 28 qui met le lubrifiant en mouvement pour qu'il puisse s'écouler en direction du réservoir 21.

La turbomachine 1 est également équipée d'un système d'extinction d'incendie 30 qui est configuré pour libérer un agent extincteur dans la turbomachine 1, lorsqu'un incendie y est détecté.

Le système d'extinction d'incendie 30 comporte au moins une bonbonne 31 d'agent extincteur. Cette bonbonne 31 sert de réserve d'agent extincteur. L'agent extincteur y est entreposé sous pression, en étant prêt à être libéré dans une canalisation 35 qui le conduit dans la turbomachine 1. La canalisation 35 achemine alors l'agent extincteur sous pression vers l'incendie.

Un conduit 37 relie fluidiquement la canalisation 35 à un orifice d'arrivée d'agent extincteur 22c qui est ménagé dans la vanne de coupure 22. Ce conduit 37 fait ainsi office de moyens de communication fluidique reliant le système d'extinction d'incendie 30 à la vanne de coupure 22.

L'intérieur du conduit 37 est vide en fonctionnement normal de la turbomachine 1. Il se remplit d'agent extincteur sous pression lorsque la bonbonne 31 libère l'agent extincteur, ce qui augmente la pression d'agent extincteur dans ce conduit 37. Le conduit 37 sert uniquement à détecter une augmentation de pression d'agent extincteur hors de la bonbonne 31 et il n'est pas utilisé pour faire transiter de l'agent extincteur à travers la vanne de coupure 22 jusqu'à l'incendie.

Par conséquent, le conduit 37 est de faible diamètre par rapport à celui de la canalisation 35. Le diamètre du conduit 37 sur celui de la canalisation 35 est par exemple compris entre 0.25 et 0.75 pouces (entre 6.35 et 19.05 millimètres).

De plus, les dimensions et la localisation du conduit 37 sont choisies pour que la pression d'agent extincteur au niveau de l'orifice d'agent extincteur 22c soit sensiblement égale à celle au nœud E de raccordement du conduit 37 à la canalisation 35.

L'orifice d'arrivée d'agent extincteur 22c est la seule entrée d'agent extincteur dans la vanne de coupure 22. L'orifice d'arrivée d'agent extincteur 22c est séparé fluidiquement de l'entrée 22a et de la sortie 22b, afin d'éviter que l'agent extincteur ne se mélange avec le lubrifiant.

En outre, la vanne de coupure 22 ne comporte pas de sortie pour l'agent extincteur. L'agent extincteur qui débouche dans l'orifice d'agent extincteur 22c exerce alors un effort de pression sur un dispositif de ressort qui démultiplie l'intensité de cet effort pour fermer la vanne de coupure 22. L'obturateur est destiné à être en position extrême d'ouverture tant que de l'agent extincteur n'a été pas été libéré dans les moyens de communication fluidique 37. Une fois que la pression de l'agent extincteur est suffisante, l'obturateur passe de sa position extrême d'ouverture à sa position extrême de fermeture.

La vanne de coupure 22 s'est alors fermée en réponse à une augmentation de pression d'agent extincteur dans le conduit 37 et au niveau de l'orifice d'arrivée d'agent extincteur 22c. En d'autres termes, la vanne de coupure 22 interdit la circulation de lubrifiant entre l'entrée 22a et la sortie 22b, en réponse à une libération d'agent extincteur dans la conduite 37.

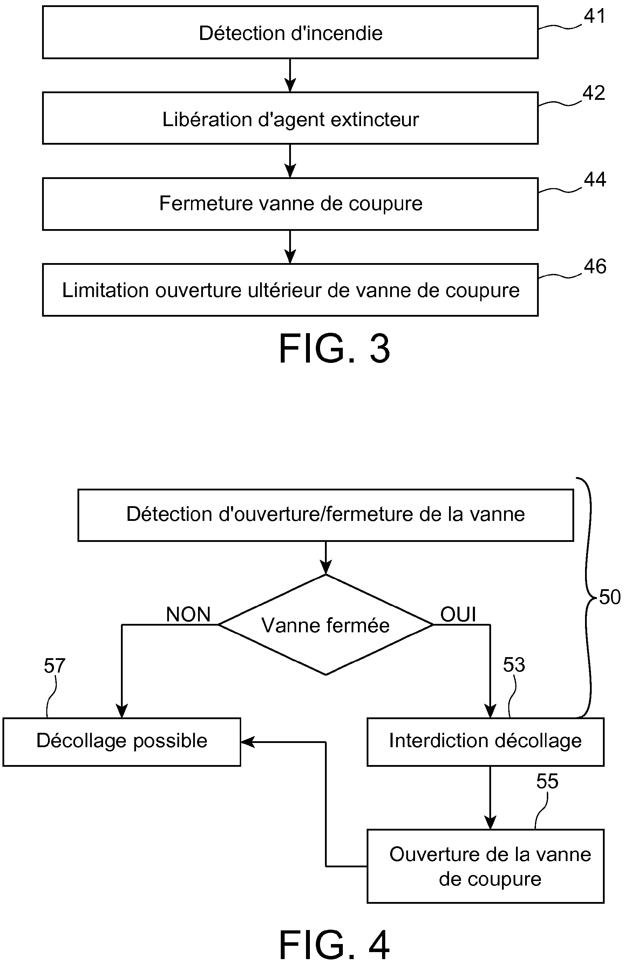

En référence à la figure 3, lorsqu'un incendie est détecté dans la turbomachine à l'étape 41, l'agent extincteur est libéré hors de la bonbonne 31 dans la canalisation 35 qui l'achemine vers l'incendie d'une part et vers la conduit 37 d'autre part, à l'étape 42.

L'arrivée d'agent extincteur dans le conduit 37 génère une augmentation de pression dans le conduit 37 qui se répercute au niveau de l'orifice d'arrivée d'agent extincteur 22c de la vanne 22. Cette augmentation de pression de l'agent extincteur dans la vanne 22 déclenche le passage de l'obturateur de sa position extrême d'ouverture à sa position extrême de fermeture, à l'étape 44.

Par la suite, l'obturateur reste dans sa position extrême de fermeture jusqu'à la fin du vol de la turbomachine 1, à l'étape 46, afin de limiter les risques que du lubrifiant stagne dans le système d'alimentation en lubrifiant 20 avant que l'incendie ne soit complètement éteint.

En référence à la figure 4, il est détecté à une étape 50 si l'obturateur est en position extrême d'ouverture pour autoriser ou non le décollage de la turbomachine 1.

Lorsqu'il est détecté que l'obturateur est en position extrême d'ouverture, le décollage de la turbomachine est autorisé, à une étape 57.

Au contraire, s'il est détecté que l'obturateur est dans une position de fermeture partielle, et en particulier dans la position extrême de fermeture, le décollage de la turbomachine est interdit, à une étape 53, tant que la vanne de coupure 22 n'est pas réarmée pour que l'obturateur se déplace de sa position extrême de fermeture jusqu'à sa position extrême d'ouverture, à une étape 55.

Une fois que la vanne de coupure 22 a été réarmée manuellement, le décollage de la turbomachine 1 est autorisé, à l'étape 57.

Bien entendu, diverses modifications peuvent être apportées par l'homme du métier à l'invention qui vient d'être décrite sans sortir du cadre de l'exposé de l'invention.

En particulier, les moyens de communication fluidique peuvent comprendre une buse en plus du conduit 37.

Par ailleurs, le fluide combustible peut être du carburant. Dans ce cas, il n'y a pas de ligne de retour de carburant vers le réservoir. Les enceintes de lubrification 26 sont remplacées par des équipements nécessitant d'être alimentés en carburant, tels que des géométries variables ou des injecteurs de chambre de combustion de turbomachine.

Enfin, la vanne de coupure peut être contrôlée par un système de régulation est de préférence un système de régulation numérique et qui peut consister en un système de régulation de type mécanique.

## Revendications

1. Ensemble pour turbomachine comprenant :
un système d'extinction d'incendie (30) configuré pour libérer un agent extincteur dans la turbomachine (1), et
un système d'alimentation (20) en fluide combustible pour turbomachine comprenant :
un réservoir de fluide (21),
une partie aval (23) située en aval du réservoir (21), et
une vanne de coupure (22) située entre le réservoir (21) et la partie aval (23), la vanne de coupure (22) étant configurée pour limiter/interdire un débit de fluide en direction de la partie aval (23),
**caractérisé en ce que** l'ensemble comprend des moyens de communication fluidique (37) reliant fluidiquement le système d'extinction d'incendie (30) à la vanne de coupure (22), la vanne de coupure (22) étant configurée pour se fermer en réponse à une augmentation de pression d'agent extincteur dans les moyens de communication fluidique (37).

2. Ensemble selon la revendication précédente, dans lequel le système d'extinction d'incendie (30) comprend au moins une canalisation (35) pour amener de l'agent extincteur sous pression dans la turbomachine (1), et
dans lequel les moyens de communication fluidique (37) comprennent un conduit (37) situé entre la canalisation (35) et la vanne de coupure (22), la vanne de coupure (22) étant configurée pour se fermer en réponse à une augmentation de pression provoquée par une arrivée d'agent extincteur dans le conduit (37).

3. Ensemble selon l'une quelconque des revendications précédentes, dans lequel le système d'extinction d'incendie (30) comprend au moins une réserve (31) d'agent extincteur, l'agent extincteur étant de préférence entreposé sous pression dans la réserve (31).

4. Ensemble selon l'une quelconque des revendications précédentes, dans lequel la vanne de coupure (22) comprend une entrée (22a) pour le fluide et une sortie (22b) pour le fluide, et
dans lequel la vanne de coupure (22) comprend en outre un orifice d'arrivé d'agent extincteur (22c) relié fluidiquement au système d'extinction d'incendie (30),
dans lequel la vanne de coupure (22) est configurée pour limiter/empêcher la circulation de fluide entre l'entrée (22a) et la sortie (22b), en réponse à une augmentation de pression d'agent extincteur (22c) dans l'orifice d'arrivée d'agent extincteur (22c).

5. Ensemble selon l'une quelconque des revendications précédentes, dans lequel la vanne de coupure (22) comprend un déclencheur de fermeture et un dispositif à ressort,
dans lequel la vanne (22) est configurée pour qu'une force de pression d'agent extincteur exercée sur le déclencheur soit démultipliée par le dispositif à ressort pour fermer la vanne de coupure (22).

6. Ensemble selon l'une quelconque des revendications précédentes, dans lequel la vanne de coupure (22) est configurée pour être réarmée manuellement, l'obturateur de la vanne de coupure se déplaçant depuis sa position extrême de fermeture jusqu'à sa position extrême d'ouverture.

7. Procédé d'isolation d'un réservoir (21) de fluide combustible relativement à une partie aval (23) de système d'alimentation en fluide pour turbomachine,
le système d'alimentation (20) comprenant le réservoir (21) et une vanne de coupure (22) située entre le réservoir (21) et la partie aval (23), la vanne de coupure (22) étant configurée pour limiter/interdire un débit de fluide en direction de la partie aval (23),
la vanne de coupure (22) étant reliée fluidiquement à un système d'extinction d'incendie (30) par des moyens de communication fluidique (37),
le système d'extinction d'incendie (30) étant configuré pour libérer un agent extincteur dans la turbomachine (1),
le procédé comprenant une étape de fermeture de la vanne de coupure (44) en réponse à une augmentation de pression d'agent extincteur dans les moyens de communication fluidique (37).

8. Procédé d'isolation selon la revendication précédente, dans lequel la vanne de coupure (22) comprend un obturateur mobile entre une position extrême d'ouverture et une position extrême de fermeture,
la vanne de coupure (22) laissant circuler du fluide en direction de la partie aval, lorsque l'obturateur est en position extrême d'ouverture,
la vanne de coupure (22) interdisant l'alimentation en fluide de la partie aval, lorsque l'obturateur est en position extrême de fermeture, et
dans lequel l'obturateur de la vanne de coupure (22) est en position extrême d'ouverture tant que de l'agent extincteur n'a été pas été libéré dans les moyens de communication fluidique (37).

9. Procédé d'isolation selon l'une quelconque des revendications 7 à 8, comprenant une étape d'interdiction d'un régime de décollage de la turbomachine (53) tant que la vanne de coupure est au moins partiellement fermée.

10. Procédé d'isolation selon l'une quelconque des revendications 7 à 9, comprenant une étape (46) de l'imitation/d'interdiction d'ouverture ultérieure de la vanne jusqu'à la fin du vol de la turbomachine, une fois que la vanne de coupure s'est fermée (44) suite à une augmentation de pression d'agent extincteur dans les moyens de communication fluidique.

## Patentansprüche

1. Anordnung für ein Triebwerk, mit:
einem Brandlöschsystem (30), das zum Freisetzen eines Löschmittels in dem Triebwerk (1) ausgeführt ist, und
einem Zuführsystem (20) für Flüssigbrennstoff für das Triebwerk, mit:
einem Flüssigkeitstank (21),
einem stromabwärtigen Teil (23), das sich stromabwärts des Tanks (21) befindet, sowie
einem Absperrventil (22), das sich zwischen dem Tank (21) und dem stromabwärtigen Teil (23) befindet, wobei das Absperrventil (22) zur Begrenzung/Verhinderung eines Flüssigkeitsstromes in Richtung des nachgeschalteten Teils (23) ausgeführt ist,
**dadurch gekennzeichnet, dass** die Anordnung Flüssigkeitsverbindungsmittel (37) aufweist, die das Feuerlöschsystem (30) strömungsmäßig mit dem Absperrventil (22) verbinden, wobei das Absperrventil (22) derart ausgeführt ist, dass es sich in Abhängigkeit eines Anstiegs des Löschmitteldrucks in den Flüssigkeitsverbindungsmitteln (37) verschließt.

2. Anordnung nach dem vorhergehenden Anspruch, wobei das Feuerlöschsystem (30) mindestens eine Leitung (35) aufweist, um das Löschmittel unter Druck in das Triebwerk (1) zu leiten, und
wobei die Flüssigkeitsverbindungsmittel (37) einen Kanal (37) zwischen der Leitung (35) und dem Absperrventil (22) aufweisen, wobei das Absperrventil (22) derart ausgeführt ist, dass es sich in Abhängigkeit eines durch ein Eintreten von Löschmittel in den Kanal (37) hervorgerufenen Druckanstiegs verschließt.

3. Anordnung nach einem der vorhergehenden Ansprüche, wobei das Feuerlöschsystem (30) mindestens einen Löschmittelvorrat (31) aufweist, wobei das Löschmittel in dem Vorrat (31) vorzugsweise unter Druck gelagert ist.

4. Anordnung nach einem der vorhergehenden Ansprüche, wobei das Absperrventil (22) einen Einlass (22a) für die Flüssigkeit und einen Auslass (22b) für die Flüssigkeit aufweist, und
wobei das Absperrventil (22) außerdem eine Löschmitteleintrittsöffnung (22c) aufweist, die strömungsmäßig mit dem Feuerlöschsystem (30) verbunden ist,
wobei das Absperrventil (22) dazu ausgeführt ist, den Flüssigkeitskreislauf zwischen dem Einlass (22a) und dem Auslass (22b) in Abhängigkeit eines Anstiegs des Löschmitteldrucks (22c) in der Löschmitteleintrittsöffnung (22c) zu begrenzen/zu verhindern.

5. Anordnung nach einem der vorhergehenden Ansprüche, wobei das Absperrventil (22) einen Verschlussauslöser und eine Federeinrichtung aufweist,
wobei das Ventil (22) derart ausgeführt ist, dass eine auf den Auslöser ausgeübte Druckkraft des Löschmittels durch die Federeinrichtung verstärkt wird, um das Absperrventil (22) zu verschließen.

6. Anordnung nach einem der vorhergehenden Ansprüche, wobei das Absperrventil (22) zur manuellen Rückstellung ausgeführt ist, wobei sich der Verschluss des Absperrventils aus seiner Schließendstellung in seine Öffnungsendstellung verschiebt.

7. Isolationsverfahren für einen Tank (21) für flüssigen Brennstoff bezüglich eines stromabwärtigen Teils (23) des Flüssigkeitszuführsystems für das Triebwerk,
wobei das Zuführsystem (20) den Tank (21) und ein zwischen dem Tank (21) und dem stromabwärtigen Teil (23) gelegenes Absperrventil (22) aufweist, wobei das Absperrventil (22) dazu ausgeführt ist, einen Flüssigkeitsstrom in Richtung des stromabwärtigen Teils (23) zu begrenzen/zu verhindern,
wobei das Absperrventil (22) strömungsmäßig mit einem Feuerlöschsystem (30) durch Flüssigkeitsverbindungsmittel (37) verbunden ist,
wobei das Feuerlöschsystem (30) derart ausgeführt ist, dass es ein Löschmittel in dem Triebwerk (1) freisetzt,
wobei das Verfahren einen Schritt des Verschließens des Absperrventils (44) in Abhängigkeit eines Anstiegs des Löschmitteldrucks in den Flüssigkeitsverbindungsmitteln (37) aufweist.

8. Isolationsverfahren nach dem vorhergehenden Anspruch, wobei das Absperrventil (22) einen zwischen einer Öffnungsendstellung und einer Schließendstellung beweglichen Verschluss aufweist,
wobei das Absperrventil (22) Flüssigkeit in Richtung des stromabwärtigen Teils zirkulieren lässt, wenn sich der Verschluss in der äußersten Öffnungsstellung befindet,
wobei das Absperrventil (22) die Zufuhr von Flüssigkeit für den stromabwärtigen Teil unterbindet, wenn sich der Verschluss in der äußersten Schließstellung befindet, und
wobei sich der Verschluss des Absperrventils (22) in der Öffnungsendstellung befindet, solange das Löschmittel nicht in den Flüssigkeitsverbindungsmitteln (37) freigesetzt worden ist.

9. Isolationsverfahren nach einem der Ansprüche 7 bis 8, mit einem Schritt zur Verhinderung eines Startzustandes des Triebwerks (53), solange das Absperrventil zumindest teilweise geschlossen ist.

10. Isolationsverfahren nach einem der Ansprüche 7 bis 9, mit einem Schritt (46) zur Begrenzung/Verhinderung der weiteren Öffnung des Ventils bis zum Ende des Fluges des Triebwerks, sobald sich Absperrventil infolge eines Anstiegs des Löschmitteldrucks in den Flüssigkeitsverbindungsmitteln verschließt.

## Claims

1. Assembly for turbomachine comprising:
a fire extinguishing system (30) configured to release an extinguishing agent into the turbomachine (1), and
a combustible fluid supply system (20) for a turbomachine comprising:
a fluid tank (21),
a downstream part (23) located downstream from the tank (21), and
a cutoff valve (22) located between the tank (21) and the downstream part (23), the cutoff valve (22) being configured to limit/prevent a fluid flow towards the downstream part (23),
**characterised in that** the assembly comprises fluid communication means (37) forming a fluid connection between the fire extinguishing system (30) and the cutoff valve (22), the cutoff valve (22) being configured to close in response to an increase in the pressure of an extinguishing agent in the fluid communication means (37).

2. Assembly according to the previous claim, in which the fire extinguishing system (30) comprises at least one pipe (35) to carry extinguishing agent under pressure into the turbomachine (1), and
in which the fluid communication means (37) comprise a conduit (37) located between the pipe (35) and the cutoff valve (22), the cutoff valve (22) being configured to close in response to a pressure increase caused by an arrival of extinguishing agent into the conduit (37).

3. Assembly according to any one of the previous claims, in which the fire extinguishing system (30) comprises at least one stock (31) of extinguishing agent, the extinguishing agent preferably being stored under pressure in the stock (31).

4. Assembly according to any one of the previous claims, in which the cutoff valve (22) comprises one inlet (22a) for the fluid and one outlet (22b) for the fluid, and
in which the cutoff valve (22) also comprises an extinguishing agent inlet orifice (22c) with a fluid connection to the fire extinguishing system (30),
in which the cutoff valve (22) is configured to limit/prevent the circulation of fluid between the inlet (22a) and the outlet (22b), in response to an increase in the pressure of the extinguishing agent (22c) in the extinguishing agent inlet orifice (22c).

5. Assembly according to any one of the previous claims, in which the cutoff valve (22) comprises a closing trigger and a spring device,
in which the valve (22) is configured such that a force applied by the pressure of the extinguishing agent applied to the trigger is amplified by the spring device to close the cutoff valve (22).

6. Assembly according to any one of the previous claims, in which the cutoff valve (22) is configured to be reset manually, the obturator of the cutoff valve moving from its extreme closed position to its extreme open position.

7. Method of isolating a combustible fluid tank (21) from a downstream part (23) of the fluid supply system for a turbomachine,
the supply system (20) including the tank (21) and a cutoff valve (22) located between the tank (21) and the downstream part (23), the cutoff valve (22) being configured to limit/prevent a fluid flow towards the downstream part (23),
wherein there is a fluid connection between the cutoff valve (22) and a fire extinguishing system (30) through communication means (37),
the fire extinguishing system (30) being configured to release an extinguishing agent into the turbomachine (1),
the method comprising a step (44) to close the cutoff valve in response to an increase in the pressure of the extinguishing agent in the fluid communication means (37).

8. Isolation method according to the previous claim, in which the cutoff valve (22) comprises an obturator free to move between an extreme open position and an extreme closed position,
the cutoff valve (22) allowing fluid to flow towards the downstream part when the obturator is in the extreme open position,
the cutoff valve (22) preventing the supply of fluid to the downstream part when the obturator is in the extreme closed position, and
in which the obturator of the cutoff valve (22) is in the extreme open position as long as the extinguishing agent has not been released into the fluid communication means (37).

9. Isolation method according to either claim 7 or 8, including a step to prevent the turbomachine (53) reaching takeoff speed when the cutoff valve is at least partially closed.

10. Isolation method according to any one of claims 7 to 9, including a step (46) to limit/prevent the valve from opening later until the end of the flight of the turbomachine, once the cutoff valve has closed (44) due to an increase in the pressure of the extinguishing agent in the fluid communication means.
